# EUROPEAN PATENT SPECIFICATION

(11) **EP 3 865 020 B1**
(45) Date of publication and mention of the grant of the patent: **05.04.2023**
(21) Application number: 21156827.4
(22) Date of filing: 12.02.2021
(51) Int. Cl.: A47J 31/44, B09B 3/00

(54) **DEVICE AND METHOD FOR EMPTYING COFFEE POWDER CAPSULES OF USED GROUNDS**
VORRICHTUNG UND VERFAHREN ZUR ENTLEERUNG VON KAFFEEPULVERKAPSELN VOM GEBRAUCHTEN MAHLGUT
DISPOSITIF ET PROCÉDÉ POUR VIDER DES CAPSULES DE POUDRE DE CAFÉ DU PRODUIT MOULÉ UTILISÉ

(30) Priority: 13.02.2020 IT 202000002848
(43) Date of publication of application: 18.08.2021
(73) Proprietor: Lufi Holding Srl, 35123 Padova (IT)
(72) Inventor: LAZZARI, Ludovico, 31048 Olmi di San Biagio di Callalta (TV) (IT)
(74) Representative: Gallo, Luca

(56) References cited:
- WO-A1-2018/185798
- CH-A2- 704 029
- IT-A1- MI20 101 096

## Description

### Field of application

The present invention regards a device for emptying coffee powder capsules of used grounds and a method for emptying coffee powder capsules of used grounds, according to the preamble of the respective independent claims.

The present device and method have particular application in the field of disposal of coffee powder capsules, since they allow separating used grounds, which are formed by used, wet coffee powder, from the coffee powder capsule in which they are contained, which is generally made of aluminum and/or plastic material.

More generally, the present device and method are therefore inserted in the technical field of disposal and recycling of urban waste, in particular in the field of recycling of urban waste.

### State of the art

For some time, machines have been known for preparing coffee drinks of substantially automatic or semi-automatic type, which employ, in the preparation of the drink, capsules containing a dose of coffee powder that is suitable for the preparation of a single drink portion.

The aforesaid capsules, known in the technical jargon of the field with the term "single-dose capsule" comprise a containment body for the coffee powder, or otherwise it could for example be tea or chocolate powder or the like, provided with an access mouth delimited by a perimeter edge and a closure wall fixed to the perimeter edge of the containment body to close the access mouth.

In a particular embodiment, well-known in the technical field of machines for preparing coffee, the closure wall of the capsule is made of breakable material, and normally is made with an aluminum sheet fixed to the perimeter edge of the capsule itself.

In this situation, in order to prepare a drink, in particular a coffee drink, a single-dose capsule is inserted in a suitable seat of the machine for preparing the drink, normally counter-shaped with respect to the capsule.

The machine normally comprises perforation means which attain a plurality of through openings on the breakable closure wall of the capsule, in order to place the dose of coffee powder in communication with the outside environment.

The machine then comprises hot water feeding means, placed in hydraulic connection with the seat where the capsule is housed, and they are activatable by a user in order to introduce a flow rate of hot water within the containment body of the capsule through the through openings made by the perforation means. The hot water therefore hits the coffee powder, making an infusion, which constitutes the coffee drink.

As is known, the machine is also provided with a dispensing channel, in fluid communication with the seat in order to allow the aforesaid drink to be collected in a cup arranged by the user at an outlet mouth of the dispensing channel of the machine itself.

Following the use of the machine for preparing the drink, the user extracts the capsule, which contains used coffee powder grounds at its interior, in order to dispose of them as waste.

In this situation, the used capsule must be disposed of as a non-recyclable waste (normally accumulated in dumps or incinerated), since it comprises a first portion (constituted by the containment body and the closure wall) made of plastic and/or aluminum and a second portion (constituted by used coffee powder grounds) of organic material.

Up to now, in field of waste disposal, there is the need to recycle the greatest quantity of possible materials, consequently preventing the production of non-recyclable waste.

For such purpose, in order to separate the used grounds from the capsule, a method is known for emptying coffee powder capsules of used grounds, executable by the user following the use of the above-described machine, which provides for cutting the closure wall of the capsule by means of a knife in order to then manually extract coffee grounds, for example by means of the same knife or another similar tool.

The method for emptying coffee powder capsules of used grounds, described briefly above, has in practice shown that it does not lack drawbacks.

The main drawback lies in the fact that the known method is long and complex, and requires precision and care by the user, in order to prevent the risk of being injured, for example during the cutting of the closure wall of the capsule.

In order to at least partially overcome the drawbacks of the prior art, known from the United States patent US 2010/212520 is a device for emptying coffee powder capsules of used grounds, which is in particular employable for the disposal of the aforesaid single-use capsule.

The device described herein comprises a support structure which internally defines a compression seat for housing a capsule containing used coffee grounds to be separated.

The device is also provided with a longitudinal guide which terminates at the aforesaid compression seat. A presser body is slidably mounted on the guide, such presser body susceptible of being moved in to-and-fro motion along the guide between a compression position, in which it intercepts the capsule placed in the compression seat in order to forcibly expel the used grounds from the containment body, and a rest configuration, in which it is distal with respect to the compression seat in order to allow the housing and the removal of the capsule itself.

More in detail, the compression seat provides for an opening for the passage of the used grounds opposite the longitudinal guide. The opening is delimited by a mouth configured for receiving in abutment a perimeter edge of the capsule, with the closure wall facing the opening of the compression seat of the device.

In operation, the presser body is manually actuated by means of a lever in order to move it from the rest position to the compression position in order to compress the aforesaid single-dose capsule, flattening it in order to push the used grounds contained in its containment body to break the breakable closure wall and exit from the opening made on the compression seat. In this manner, it is possible to separate the used grounds from the capsule made of aluminum and/or plastic.

The aforesaid device for emptying the capsules of the used grounds of known type has in practice shown that it does not lack drawbacks.

The main drawback lies in the fact that following the compression of the capsule, the closure wall made of aluminum is often crushed due to the high pressure exerted by the presser body and is expelled together with the used grounds, thus requiring the user to manually extract possible portions of the aforesaid closure wall before disposing the used grounds.

A further drawback lies in the fact that the device of known type is complex and costly, susceptible of jamming or breakage which determine little use thereof by the final users.

In order to at least partially overcome the drawbacks of the known device described briefly up to now, known from the patent WO 2011651867 is a further device for emptying coffee powder capsules of used grounds, which in particular is integrated inside an aforesaid machine for preparing coffee drinks.

The aforesaid device of known type comprises guide means arranged for receiving the capsule once used for preparing the coffee drink and configured for directing the capsule towards an upper wall of a box-like body which delimits a collection chamber (it too made in the box-like body) of the used grounds.

More in detail, the capsule is placed with its perimeter edge in abutment against a mouth of the aforesaid upper wall which delimits a through opening and the closure wall facing towards the through opening itself, which is communicating with the aforesaid collection chamber.

The device of known type also comprises a cutting element of substantially cylindrical shape mechanically connected to the upper wall of the box-like body and placed around the through opening in a manner such to intercept the closure wall of the capsule.

The device therefore provides for a presser body aligned with the through opening and susceptible of being moved in a to-and-fro motion between a compression position, in which it intercepts the capsule placed on the opening in order to forcibly expel the used grounds from the containment body and collect them within the collection chamber, and a rest configuration, in which it is distal with respect to the through opening in order to allow the housing of the capsule.

More in detail, the cutting element is adapted to incise the closure wall of the capsule when the presser body is moved into the compression position in order to separate it from the perimeter edge of the capsule and facilitate the exit of the used grounds from the containment body, avoiding the risk that the aforesaid closure wall is broken into fragments. The aforesaid machine also comprises movement means arranged for bringing the capsule thus compressed from the upper wall of the box-like body towards a collection space for the aforesaid compressed capsules.

Nevertheless, also the latter device for emptying coffee powder capsules of used grounds of known type, described briefly up to now, has in practice shown that it does not lack drawbacks.

The main drawback lies in the fact that such device of known type is extremely complex and costly, since it requires the aforesaid guide means in order to bring the capsule from the seat of the machine for producing coffee drinks towards the device for emptying capsules, means for actuating the presser body and movement means for bringing the compressed capsules into a corresponding collection space.

A further drawback lies in the fact that the device of known type is configured for being integrated within the machine for producing drinks.

In this situation, the aforesaid machine is therefore structurally complicated, costly to make and not entirely reliable in operation, since it could easily break down or be subjected to malfunctions of several parts thereof.

A further drawback of the devices of known type lies in the fact that the used grounds are hard to access by the user, once collected. Such grounds are rich with water and organic material that is susceptible of getting moldy in little time, therefore leading to the need for periodic and systematic cleaning of the device.

A further device for emptying coffee powder capsules of used grounds is known from CH-A_704029. More in detail, the device disclosed in this patent shows a base body with a support surface and two tabs defining two guiding groves on the support surface for receiving the radially projecting edge of the capsules. The base body also comprises two cutting teeth radially separated and placed near the tabs.

Operatively, the used capsules, containing coffee grounds in a volume closed by a cover foil, are inserted with their radially projecting edge into the grooves of the tabs serving as a guide device. Then the capsules are pressed onto the support surface so that the cutting teeth locally cut open the cover foils. By rotating the capsules by about 180 degrees about their central axis, the cutting teeth cut open the cover films along a circle so that they can be separated out. The capsules, freed from the cover foils, are then turned upside down onto a tapered area of the base body and rotated by approximately 180 degrees about their central axis. As a result, the coffee grounds are removed from the inner contour of the capsules and can be poured out of the capsules.

### Presentation of the invention

In this situation, the object underlying the present invention is therefore that of eliminating the problems of the abovementioned prior art, by providing a device for emptying coffee powder capsules of used grounds and a method for emptying coffee powder capsules of used grounds, which allow a user to remove the used grounds from the capsule in which they are contained in a simple and quick manner.

A further object of the present invention is to provide a device for emptying coffee powder capsules of used grounds and a method for emptying coffee powder capsules of used grounds, which allow quickly and effectively separating the closure wall from the containment body of the capsule so as to be able to separately dispose of them, in the event that they are made of different materials, and more particularly respectively of aluminum and of plastic material.

A further object of the present invention is to provide a device for emptying coffee powder capsules of used grounds and a method for emptying coffee powder capsules of used grounds, which allow quickly and simply accessing the collected used grounds, avoiding the risk of forming molds and allowing a use of such used grounds for example as fertilizer for cultivations.

A further object of the present invention is to provide a device for emptying coffee powder capsules of used grounds and a method for emptying coffee powder capsules of used grounds, which are simple and inexpensive to make.

A further object of the present invention is to provide a device for emptying coffee powder capsules of used grounds and a method for emptying coffee powder capsules of used grounds, which are entirely reliable with regard to structure and operations.

### Brief description of the drawings

The technical characteristics of the invention, according to the aforesaid objects, can be clearly seen in the contents of the below-reported claims and the advantages of the same will be more evident in the following detailed description, made with reference to the enclosed drawings, which represent a merely exemplifying and non-limiting embodiment of the invention, in which:

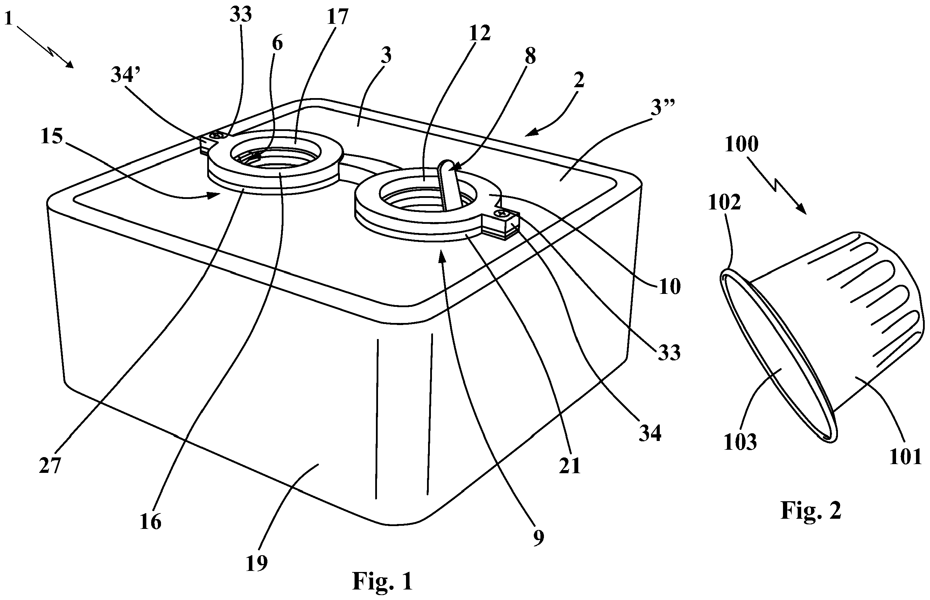

- figure 1 shows a perspective view of a device for emptying coffee powder capsules of used grounds, in accordance with a preferred embodiment;
- figure 2 shows a perspective view of a coffee powder capsule, suitably for being emptied of used grounds by a device, object of the present invention;
- figure 3 shows a plan view of the device of figure 1;

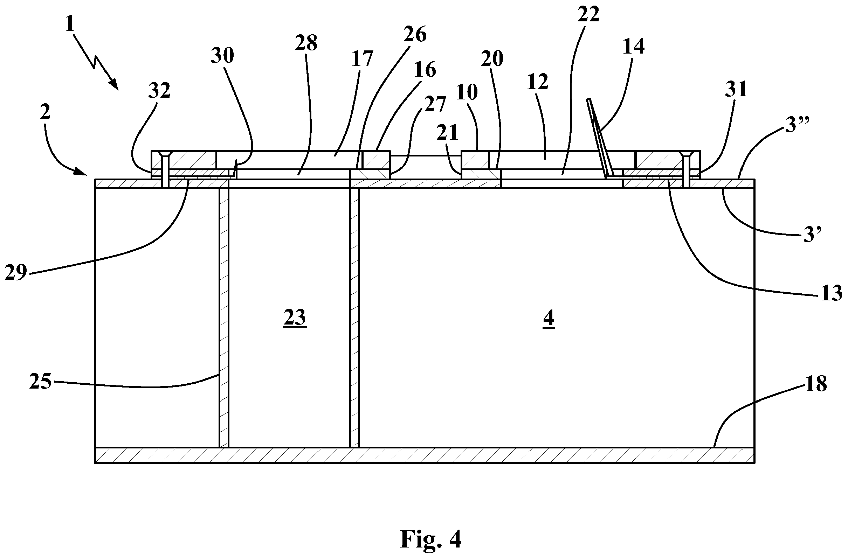

- figure 4 shows a front sectional view of the device of figure 1, made along the trace IV-IV of figure 2;

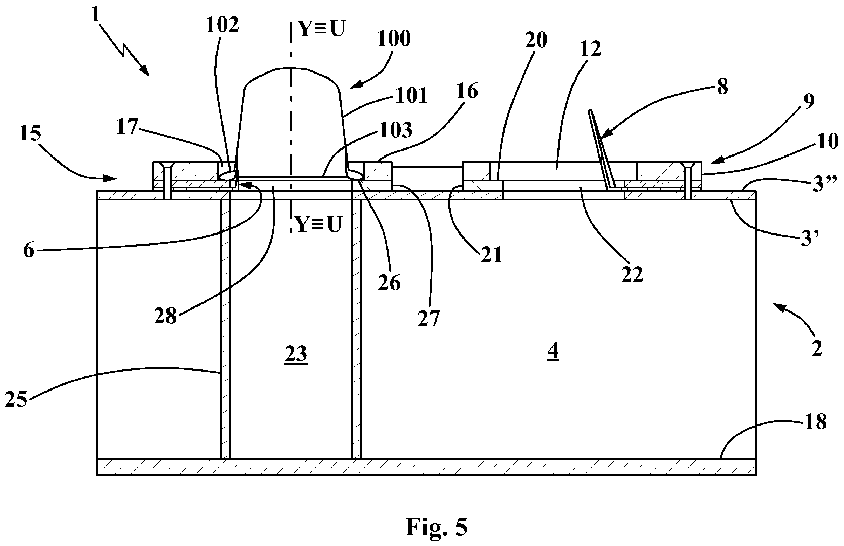

- figure 5 shows a front sectional view of the device of figure 1, made along the trace IV-IV of figure 2, during an incision step of the method, object of the present invention;

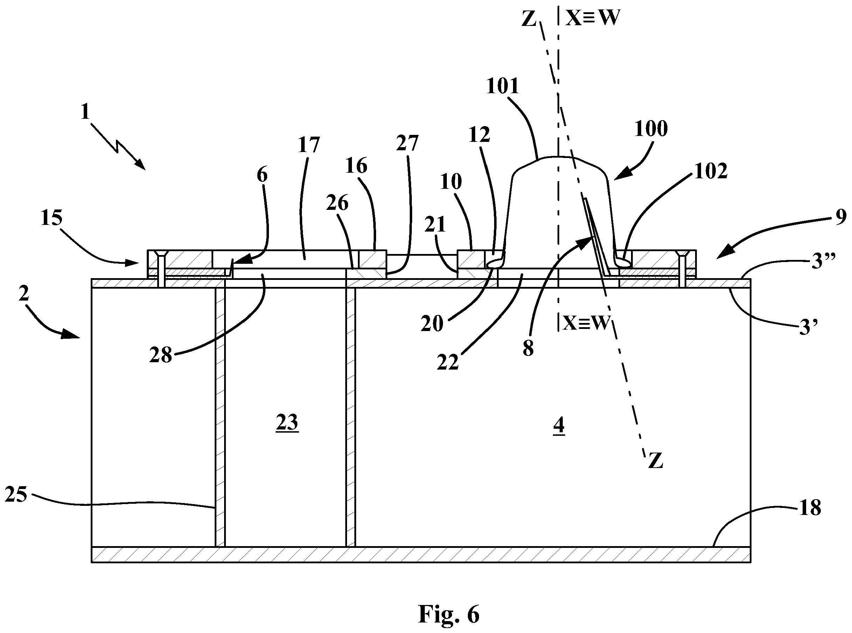

- figure 6 shows a front sectional view of the device of figure 1, made along the trace IV-IV of figure 2, during a separating step of the method, object of the present invention.

### Detailed description of a preferred embodiment

With reference to the enclosed drawings, reference number 1 overall indicates a device for emptying coffee powder capsules 100 of used grounds, object of the present invention.

In the following text, reference will be made - merely for the sake of description clarity - to capsule 100, per se known to the man skilled in the art, of the type comprising a containment body 101 for coffee powder, which defines, by means of a perimeter edge 102, an access mouth, and a closure wall 103 fixed to the perimeter edge 102 of the containment body 101 to close the access mouth.

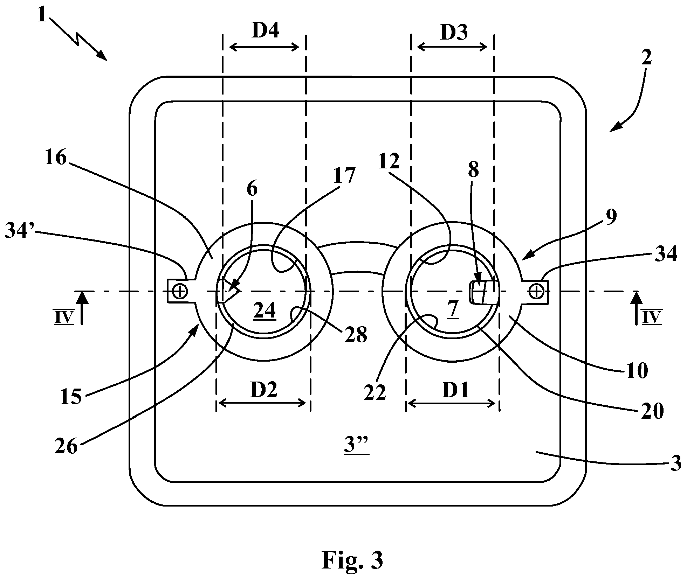

More in detail, with particular reference to the enclosed figure 3, the coffee powder capsules 100 are normally made of plastic material and/or metallic material such as in particular aluminum. In particular, the containment body 101 is normally made of plastic material and the closure wall 103 is normally made of aluminum.

Of course, any type of capsule in which the closure wall 103 is made of breakable material, i.e. of material susceptible of being broken and/or cut, must be intended as suitable for being used with the device 1, object of the present invention.

In order to allow a selective disposal of the used grounds, of the containment body 101 and of the closure wall 103, the device 1 is advantageously employable for removing used grounds from the capsule 100, in which the grounds are substantially formed by coffee powder that is wet following the use of the capsule 100 in a machine of known type for preparing coffee.

The used grounds thus separated from the capsule 100 can be collected and disposed of as an organic fraction of the solid urban waste, i.e. they can be reused, for example directly by the user, as fertilizer for plants and flowers.

The present device 1 comprises a box-like body 2, which internally defines at least one collection chamber 4 for used grounds and is provided with at least one upper wall 3 which externally faces with a visible upper face 3", and at least one cutting element 6, which is mechanically connected to the upper wall 3 of the box-like body 2, is projectingly extended from the upper face 3" of the upper wall 3 of the box-like body 2 and is intended to cut the closure wall 103 of the capsule 100 in order to at least partially separate the closure wall 103 from the containment body 101 of the capsule 100 itself.

In addition, the upper wall 3 of the box-like body 2 is provided with at least one first through opening 7 for discharging the aforesaid used grounds within the collection chamber 4.

According to the idea underlying the present invention, the present device 1 comprises at least one blade 8 mechanically connected to the upper wall 3 of the box-like body 2, projectingly extended from the upper face 3" of the upper wall 3 of the box-like body 2, placed at the first through opening 7 of the upper wall 3 and susceptible of intercepting the used grounds and separating them from the containment body 101 of the capsule 100 in order to make the used grounds at least partially fall into the collection chamber 4 through the first through opening 7.

With the term "mechanically connected" it must be intended hereinbelow that the cutting element 6 and the blade 8 can be directly fixed to the upper wall 3 of the box-like body 2, i.e. be integral with the aforesaid upper wall 3 in an indirect manner, i.e. with further components and/or elements of the present device 1 interposed.

Preferably, the upper wall 3 of the box-like body 2 internally faces towards the collection chamber 4 with an internal face 3', in particular opposite the external face 3", and intended to be hidden from sight with the device 1 in use.

In accordance with the preferred embodiment illustrated in the enclosed figures, the box-like body 2 also comprises a lower wall 18 placed spaced with respect to the upper wall 3 and extended substantially parallel to the latter and at least one lateral wall 19 placed to join, preferably in a perimeter manner, the upper wall 3 and the lower wall 18, so as to at least partially cover from the user's view the collection chamber 4 intended to contain the used grounds removed from capsules 100 and hence increase the aesthetic value of the present device 1.

In use, the lower wall 18 is intended to be abutted on a work surface, e.g. a table, lying on a plane with substantially horizontal extension.

For example, moreover, the upper wall 3 and the lower wall 18 of the box-like body 2 have substantially congruent, quadrangular form and have four corresponding perimeter sides connected to each other by means of four corresponding lateral walls 19, extended transversely to the upper 3 and lower 18 walls.

Preferably, the upper wall 3 is removable from the box-like body 2 so as in particular to allow access by a user to the collection chamber 4 in order to collect the used grounds contained therein.

In operation, following the use of the capsule 100 in the preparation of a coffee by means of a machine for preparing coffee of known type, the user removes the aforesaid capsule 100 from the machine and incises the closure wall 103 with the cutting element 6 of the device 1 up to at least partially separating the closure wall 103 from the perimeter edge of the capsule 100, in order to then separate the used grounds from the containment body 101 by means of the insertion of the blade 8 within the containment body 101 itself, allowing the used grounds to fall within the collection chamber 4 through the through opening 7.

Advantageously, the present device 1 comprises first guide means 9 placed around the first through opening 7 and susceptible of rotatably guiding the perimeter edge 102 with the blade 8 placed inside the containment body 101 of the capsule 100 in order to intercept the used grounds.

More in detail, the first guide means 9 comprise a first annular shoulder 10 mechanically fixed to the upper face 3" of the upper wall 3 of the box-like body 2 and provided with at least one first internal lateral wall 12 with substantially cylindrical shape extended around a first axis X. The aforesaid first internal lateral wall 12 is advantageously configured for receiving in abutment and slidably guiding the perimeter edge 102 of the capsule 100 to rotate around the first axis X.

With particular reference to the embodiment illustrated in the enclosed figures, the first axis X is substantially orthogonal to the upper wall 3 of the box-like body and preferably defines a rotation axis for the capsule 100 during the removal of the used grounds.

For the purpose of receiving the capsule 100, the first annular shoulder 10 internally defines a work seat, delimited by the internal lateral wall 12.

Advantageously, in accordance with the preferred but non-limiting embodiment illustrated in the enclosed figures, the first annular shoulder 10 has substantially prismatic shape with circular crown base. Of course, the first annular shoulder 10 can have any shape adapted to define the aforesaid work seat for collecting the perimeter edge 102 of the capsule 100 in order to rotatably guide it, without departing from the protective scope of the present patent. The first internal lateral wall 12 advantageously has substantially cylindrical shape and is provided with a first internal diameter D1 greater than or equal to the width of the first through opening 7, in a manner such that the aforesaid first guide means 9 delimit, in particular by means of the first annular shoulder 10, a first abutment surface 20 extended orthogonally with respect to the first internal lateral wall 12, for example on the upper surface 3" of the upper wall 3 of the box-like body 2.

In accordance with the preferred embodiment illustrated in the enclosed figures, the first guide means 9 comprise a third annular shoulder 21 mechanically fixed to the upper face 3" of the upper wall 3 of the box-like body 2, in particular interposed between the first annular shoulder 10 and the upper wall 3 itself.

The aforesaid third annular shoulder 21 is provided with a third internal lateral wall 22 extended around a third axis W, in particular coinciding with the first axis X of the first internal lateral wall 12, and provided with a third internal diameter D3 advantageously smaller than the first internal diameter D1.

In this situation, the first abutment surface 20 of the first guide means 9 remains defined on a third upper surface of the third annular shoulder 21, perimetrically delimited by a lower circular edge of the first internal lateral wall 12.

In accordance with a further embodiment not illustrated in the enclosed figures, the first abutment surface 20 of the first guide means 9 is defined on the upper face 3" of the upper wall 3 of the box-like body 2 between the lower circular edge of the first internal lateral wall 12 of the first annular shoulder 10 and the first through opening 7 of the upper wall 3 itself.

In this manner, the perimeter edge 102 of the capsule 100 can be placed to traverse the first shoulder 100, in particular placed at least partially in abutment against the first internal lateral wall 12, which slidably guides it to rotate around the first axis X, and on the lower part in abutment against the first abutment surface 20 of the first guide means 9, whether this is defined on the upper face 3" of the upper wall 3 of the box-like body 2 or on the third annular shoulder 21. The first abutment surface 20 therefore supports the capsule 100 during its rotation around the first axis X.

In operation, in order to separate the used grounds from the capsule 100, the user places the capsule 100 with the perimeter edge 102 inserted within the first internal lateral wall 12 of the first annular shoulder 10 of the first guide means 9, with the blade 8 inserted in the containment body 101. The user then rotates the capsule 100, in which perimeter edge 102 is rotatably guided by the first internal lateral wall 12, around the first axis X in a manner such that the blade 8 separates the used grounds from the containment body 101 preferably along the entire circumference defined by the perimeter edge 102. Once separated from the containment body 101, the used grounds fall via gravity within the collection chamber 4, crossing the first through opening 7.

Advantageously, the blade 8 comprises a first fixing bracket 13 extended at least partially parallel to the upper wall 3 of the box-like body 2, mechanically constrained to the box-like body 2 itself and interposed at least between the first annular shoulder 10 and the external face 3" of the upper wall 3, and a work portion 14 extended starting from the first fixing bracket 13, in particular substantially orthogonally and/or tilted with respect to the upper wall 3 of the box-like body 2, at the first through opening 7 and intended to intercept the used grounds of the capsule 100.

In order to facilitate the insertion of the work portion 14 of the blade 8 in the containment body 101 of the capsule 100, the work portion 14 itself is extended preferably starting from one end of the first fixing bracket 13 placed substantially at the first through opening 7.

In accordance with the preferred embodiment illustrated in the enclosed figures, the third annular shoulder 21 defines a first housing seat that is substantially counter-shaped with respect to the first fixing bracket 13 of the blade 8, and in such first housing seat the first fixing bracket 13 is placed in order to be retained interposed between the first annular shoulder 10 and the upper face 3" of the upper wall 3.

More in detail, the annular extension of the third shoulder 21 is interrupted so as to define the aforesaid first housing seat.

Advantageously, the device 1 comprises fixing means 33, e.g., screws and/or rivets, placed as a mechanical connection between the first annular shoulder 10 and the upper wall 3 of the box-like body 2.

More in detail, the first annular shoulder 10 comprises a corresponding first lateral fixing tab 34 provided with a through hole orthogonal to the upper face 3" and engaged by the aforesaid fixing means 33, in particular a screw. The screw of the fixing means is adapted to push the first annular shoulder 10 against the upper face 3" of the upper wall 3.

Preferably, in order to mechanically block the first fixing bracket 13 of the blade 8 between the first annular shoulder 10 and the upper face 3" of the upper wall 3, the first fixing bracket 13 is provided with thickness (parallel to the first axis X) greater than the thickness of the third annular shoulder 21 in a manner such that the action of the fixing means 33 firmly block the first fixing bracket 13 between the upper wall 3 and the first annular shoulder 10. Otherwise, the device 1 comprises a first spacer element 31 interposed between the first fixing bracket 13 and the first annular shoulder 10, and/or between the first fixing bracket 13 and the upper face 3" of the upper wall 3.

More in detail, the first spacer element 31 is provided with thickness (parallel to the first axis X) such that the sum of the thickness of the first fixing bracket 13 and of the first spacer element 31 is greater than the thickness of the third annular shoulder 21, so as to allow a firm gripping of the fixing bracket 13 between the first annular shoulder 10 and the upper wall 3 of the box-like body 2 by means of the action of the fixing means 33.

Otherwise, the first fixing bracket 13 of the blade 8 is mechanically constrained to the box-like body 2 placed in abutment against the lower face 3' of the upper wall 3 with the work portion 14 placed to traverse the first through opening 7 in order to at least partially project from the upper face 3".

Advantageously, the work portion 14 of the blade 8 has substantially planar extension along a lying plane Z that is tilted with respect to the first axis X.

Preferably, the lying plane Z of the work portion 14 forms, with the first axis X, an angle substantially comprised between 10° and 40°, in a manner such that the work portion 14 is substantially parallel to the containment body 101 of the capsule 100.

Advantageously, the present device 1 comprises second guide means 15 placed around at least the cutting element 6 and susceptible of rotatably guiding the perimeter edge 102 of the capsule 100 with the cutting element 6 placed to traverse the closure wall 103 of the capsule 100 in order to separate the closure wall 103 from the perimeter edge 102 of the capsule 100 and remove it from the perimeter edge 102.

More in detail, the second guide means 15 comprise, advantageously, a second annular shoulder 16 mechanically fixed to the upper face 3" of the upper wall 3 of the box-like body 2 and provided with at least one second internal lateral wall 17 with substantially cylindrical shape extended around a second axis Y and configured for slidably guiding the perimeter edge 102 of the capsule 100 to rotate around the second axis Y with the cutting element 6 placed to traverse the closure wall 103.

In operation, in order to separate the closure wall 103 from the perimeter edge 102 of the capsule 100, the user places the capsule 100 with the perimeter edge 102 inserted in the second annular shoulder 16 of the second guide means 15, at least partially in abutment against the second internal lateral wall 17 of the second annular shoulder 16 and with the cutting element 6 placed to traverse the closure wall 103 itself. Subsequently, the user manually forces the capsule 100 to rotate around the second axis Y, rotatably guided with the perimeter edge 102 in abutment against the second lateral wall 17, in a manner such that the cutting element 6 cuts the closure wall 103 substantially at the perimeter edge 102 preferably along the entire circumference defined by the perimeter edge 102, separating such wall from the latter edge.

In this manner it is possible to separately dispose of the closure wall 103 and the containment body 101 of the capsule 100, even in the event that the closure wall 103 and the containment body 101 are made of different materials.

In accordance with the preferred embodiment illustrated in the enclosed figures, the box-like body 2 internally defines a collection space 23 for the closure wall 103 separated by the perimeter edge 102.

In order to place the collection space 23 in communication with the outside environment, the upper wall 3 of the box-like body 2 is provided with a second through opening 24, advantageously provided at the cutting element 6, for quickly and simply discharging the closure wall 103 within the collection space 23. In this manner, the closure wall 103 separated from the perimeter edge 102 of the capsule 100 falls via gravity into the collection space 23 through the second through opening 24.

Preferably, the box-like body 2 comprises an internal dividing wall 25 extended as a connection of the upper wall 3 with the lower wall 18, preferably substantially transversely between the latter.

More in detail, the internal dividing wall 25 at least partially separates the collection chamber 4 for the used grounds from the collection space 23 for the closure walls 103 of the capsules 100.

In accordance with a further embodiment not illustrated in the enclosed figures, the box-like body 2 comprises two internal dividing walls 25, each of which delimiting a corresponding between the collection chamber 4 and the collection space 23.

More in detail, at least one of the two internal dividing walls 25 is preferably provided with substantially cylindrical extension and is extended between the upper wall 3 and the lower wall 18 and substantially at one between the first through opening 7 and the second through opening 24, at its interior delimiting the collection chamber 4 or the collection space 23.

In particular, in accordance with the preferred embodiment, the dividing wall 25 delimiting the collection space 23 for the closure walls 103 of the capsules 100 substantially has cylindrical shape. The internal volume of the box-like body 2, remaining between the upper, lower and lateral walls and the dividing wall 25, instead defines the collection chamber 4 for the used grounds.

In a manner analogous to that described with reference to the first annular shoulder 10, the second internal lateral wall 17 of the second annular shoulder 16 preferably has substantially cylindrical shape and is provided with a second internal diameter D2 greater than the width of the second through opening 24, in a manner such that the aforesaid second guide means 15 define a second abutment surface 26 extended orthogonally with respect to the second internal lateral wall 17, for example on the upper surface 3" of the upper wall 3 of the box-like body 2.

In this manner, the capsule 100 can be at least partially placed to traverse the second annular shoulder 16 with the perimeter edge 102 placed at least partially in abutment against the second internal lateral wall 17, which slidably guides it to rotate around the second axis Y, and against the second abutment surface 26 of the second guide means 15, which acts as end stop for the capsule 100 with respect to a movement thereof along the axis Y, preventing the risk that this falls into the collection space 23.

The second guide means 15 optionally comprise, with particular reference to the enclosed figures, a fourth annular shoulder 27 mechanically fixed to the second annular shoulder 17 and to the upper face 3" of the upper wall 3 of the box-like body 2 and interposed therebetween. The aforesaid fourth annular shoulder 27 is provided with a fourth internal lateral wall 28 extended around a fourth axis U, in particular substantially coinciding with the second axis Y of the second internal lateral wall 17.

Preferably, the fourth internal lateral wall 28 is provided with a fourth internal diameter D4 smaller than the second internal diameter D2. In this manner, the second abutment surface 26 of the second guide means 15 is therefore defined on the fourth annular shoulder 27 between a lower circular edge of the second internal lateral wall 17 of the second annular shoulder 16 and an upper circular edge of the fourth internal lateral wall 28 of the fourth annular shoulder 27.

In accordance with a further embodiment not illustrated in the enclosed figures, the second abutment surface 26 of the second guide means 15 is defined on the upper face 3" of the upper wall 3 of the box-like body 2 between the lower circular edge of the second internal lateral wall 17 of the second annular shoulder 16 and the second through opening 24 of the upper wall 3 itself.

In order to mechanically constrain the cutting element 6 to the upper wall of the box-like body 2, the cutting element 6 advantageously comprises a second fixing bracket 29 extended at least partially parallel to the upper wall 3 of the box-like body 2, mechanically constrained to the box-like body 2 and interposed at least between the second annular shoulder 16 and the external face 3" of the upper wall 3 of the box-like body 2.

The cutting element 6 then comprises preferably at least one blade 30 extended starting from the second fixing bracket 29 substantially orthogonally and/or tilted with respect to the upper wall 3 of the box-like body 2, advantageously (if provided) at the second through opening 24 and intended to incise and cut the closure wall 103 of the capsule 100.

Preferably, the blade 30 is extended starting from one end of the second fixing bracket 29 placed substantially at the second through opening 24.

Advantageously, the device 1 comprises the aforesaid fixing means 33, e.g. screws and/or rivets, placed to mechanically connect between the second annular shoulder 16 and the upper wall 3 of the box-like body 2.

More in detail, the second annular shoulder 16 comprises a corresponding second lateral fixing tab 34' provided with a through hole orthogonal to the upper face 3" and engaged by the aforesaid fixing means 33, in particular a screw. The screw of the fixing means is adapted to push the second annular shoulder 16 against the upper face 3" of the upper wall 3.

In accordance with the preferred embodiment illustrated in the enclosed figures, the fourth annular shoulder 27 defines a second housing seat substantially counter-shaped with respect to the second fixing bracket 29 of the cutting element 6, and in such second housing seat the second fixing bracket 29 itself is placed, retained interposed between the second annular shoulder 16 and the upper face 3" of the upper wall 3.

More in detail, the annular extension of the fourth annular shoulder 27 is interrupted, delimiting the aforesaid second housing seat for the fixing bracket 29.

Preferably, in order to mechanically block the second fixing bracket 29 of the cutting element 6 between the second annular shoulder 16 and the upper face 3" of the upper wall 3, the second fixing bracket 29 is provided with thickness (parallel to the first axis X) greater than the thickness of the fourth annular shoulder 27 in a manner such that the action of the fixing means 33 firmly block the second fixing bracket 29, between the upper wall 3 and the second annular shoulder 16.

Otherwise, the device 1 comprises a second spacer element 32 interposed between the second fixing bracket 29 and the second annular shoulder 16, or between the second fixing bracket 29 and the upper face 3" of the upper wall 3.

Otherwise, additionally, in accordance with a further embodiment not illustrated in the enclosed figures, the second fixing bracket 29 of the cutting element 6 is mechanically constrained to the box-like body 2 placed in abutment against the lower face 3' of the upper wall 3. In this situation, the blade 30 is extended starting from the second fixing bracket 29 to traverse the second through opening 24, at least partially projecting from the upper face 3".

Also forming the object of the present invention is a method for emptying coffee powder capsules of the used grounds, advantageously attainable by means of a device for emptying coffee powder capsules of used grounds of the above-described type, regarding which the reference numbers will be maintained for the sake of description simplicity.

The present method comprises a step of arranging the capsule 100, a step of incising the closure wall 103 of the capsule 100, in which the closure wall 103 is thrust to approach the external face 3" of the upper wall 3 of the box-like body 2 with the cutting element 6 placed to traverse of the closure wall 103 of the capsule 100, and a step of cutting the closure wall 103 of the capsule 100, in which the capsule 100 is moved, maintaining the cutting element 6 to traverse the closure wall 103 in order to at least partially separate the closure wall 103 from the perimeter edge 102 of the capsule 100.

A step is also provided for inserting the blade 8 within the containment body 101 of the capsule 100, with the blade 8 placed to intercept said used grounds.

Preferably, the inserting step provides for moving the capsule 100 in approaching the upper wall 3 of the box-like body 2 in order to bring blade 8 within the containment body 101 to intercept the used grounds.

Following the insertion step, a step is provided for separating the used grounds from the capsule 100, in which the capsule 100 is moved, maintaining the blade 8 within the containment body 101 to intercept the used grounds, at least partially separating them from the containment body 101 of the capsule 100 in order to make the used grounds fall into the collection chamber 4 through the first through opening 7.

In accordance with the preferred embodiment of the present device 1, the separating step provides for rotating the capsule 100 in a guided manner with the perimeter edge 102 operatively associated with the first guide means 9 around the first axis X, which also coincides with a first rotation axis of the capsule 100 during the separating step.

In the aforesaid separating step the blade 8 interferes with the used grounds, separating them from the containment body 101 of the capsule 100.

In this manner, the capsule 100 rotates around the first axis X with the blade 8 fixed, which separates the used grounds from the containment body 101 along the entire circumference defined by the perimeter edge 102.

Advantageously, the cutting step provides for rotating the capsule 100 in a guided manner with the perimeter edge 102 on the second guide means 15 around the second axis Y.

In this manner, the cutting element 6 is maintained to traverse the closure wall 103 with the capsule 100 rotated in order to cut the closure wall 103 substantially to size with the perimeter edge 102 along the entire circumference defined by the perimeter edge 102, entirely separating such wall 103 from the latter edge 102.

The invention thus conceived therefore attains the pre-established objects.

In particular, the above-described device and method for emptying coffee powder capsules of used grounds allow removing the used grounds from the capsule in which they are contained, in a simple and quick manner.

## Claims

1. Device for emptying coffee powder capsules (100) of used grounds, said capsules (100) being of the type comprising:
- a containment body (101) for coffee powder defining, by means of a perimeter edge (102), an access mouth;
- a closure wall (103) fixed to the perimeter edge (102) of the containment body (101) to close the access mouth;
said device (1) comprising:
- a box-like body (2) internally defining at least one collection chamber (4) for used grounds and provided with at least one upper wall (3) which externally faces with a visible upper face (3"),
- at least one cutting element (6) mechanically connected to the upper wall (3) of said box-like body (2) and projectingly extended from the upper face (3") of the upper wall (3) of said box-like body (2) and intended to cut the closure wall (103) of said capsule (100) in order to at least partially separate the closure wall (103) from the containment body (101) of said capsule (100);
the upper wall (3) of said box-like body (2) being provided with at least one first through opening (7) for discharging the used grounds within said collection chamber (4); wherein said device (1) comprises
- at least one blade (8) mechanically connected to the upper wall (3) of said box-like body (2) and projectingly extended from the upper face (3") of the upper wall (3) of said box-like body (2), placed at the first through opening (7) of said upper wall (3) and susceptible of intercepting the used grounds and separating them from the containment body (101) of said capsule (100) in order to make said used grounds at least partially fall into said collection chamber (4) through said first through opening (7).

2. Device (1) according to claim 1, **characterized in that** it comprises first guide means (9) placed around said at least one first through opening (7) and susceptible of rotatably guiding the perimeter edge (102) with said at least one blade (8) placed inside the containment body (101) of said capsule (100) in order to intercept said used grounds.

3. Device (1) according to claim 2, **characterized in that** said first guide means (9) comprise a first annular shoulder (10) mechanically fixed to the upper face (3") of the upper wall (3) of said box-like body (2) and provided with at least one first internal lateral wall (12) with substantially cylindrical shape extended around a first axis (X), configured for slidably guiding the perimeter edge (102) of said capsule (100) to rotate around said first axis (X).

4. Device (1) according to claim 3, **characterized in that** the first internal lateral wall (12) of said first guide means (9) with substantially cylindrical shape is provided with a first internal diameter (D1) greater than or equal to the width of said first through opening (7).

5. Device (1) according to claim 4, **characterized in that** said blade (8) comprises:
- a first fixing bracket (13) extended at least partially parallel to the upper wall (3) of said box-like body (2) and mechanically constrained to said box-like body (2), interposed at least between said first annular shoulder (10) and the external face (3") of the upper wall (3) of said box-like body (2);
- a work portion (14), extended starting from said first fixing bracket (13), substantially orthogonal with respect to the upper wall (3) of said box-like body (2) at said first through opening (7) and intended to intercept the used grounds of said capsule (100).

6. Device (1) according to claim 5, **characterized in that** the work portion (14) of said blade (8) has substantially planar extension along a lying plane (Z) that is tilted with respect to said first axis (X).

7. Device (1) according to any one of the preceding claims 2 to 6, **characterized in that** it comprises
second guide means (15) placed around at least said at least one cutting element (6) and susceptible of rotatably guiding the perimeter edge (102) of said capsule (100) with said at least one cutting element (6) placed to traverse the closure wall (103) of said capsule (100) in order to separate said closure wall (103) from the perimeter edge (102) of said capsule (100) and remove it from said perimeter edge (102).

8. Device (1) according to claim 7, **characterized in that** said second guide means (15) comprise a second annular shoulder (16) mechanically fixed to the upper face (3") of the upper wall (3) of said box-like body (2) and provided with at least one second internal lateral wall (17) of substantially cylindrical shape extended around a second axis (Y) and configured for slidably guiding the perimeter edge (102) of said capsule (100) to rotate around said second axis (Y) with said cutting element (6) placed to traverse said closure wall (103).

9. Method for emptying coffee powder capsules of the used grounds, attainable by means of a device (1) according to any one of the preceding claims and comprises at least:
- a step of arranging said capsule (100);
- a step of incising the closure wall (103) of said capsule (100), wherein the closure wall (103) is thrust to approach the external face (3") of the upper wall (3) of said box-like body (2) with said cutting element (6) placed to traverse the closure wall (103) of said capsule (100);
- a step of cutting the closure wall (103) of said capsule (100), wherein said capsule (100) is moved, maintaining said cutting element (6) to traverse said closure wall (103) in order to at least partially separate said closure wall (103) from the perimeter edge (102) of said capsule (100);
- a step of inserting said blade (8) within said containment body (101) of said capsule (100), with said blade (8) placed to intercept said used grounds;
- a step of separating the used grounds from said capsule (100), wherein said capsule (100) is moved, maintaining said blade (8) within said containment body (101) to intercept said used grounds, at least partially separating them from the containment body (101) of said capsule (100) in order to make said used grounds fall into said collection chamber (4) through said first through opening (7).

10. Method according to claim 9, attainable by means of a device according to one of claims 2 to 6, **characterized in that** said separation step provides for rotating said capsule (100) in a guided manner with the perimeter edge (102) on said first guide means (9) around said first axis (X), said blade (8) interfering with said used grounds, separating them from the containment body (101) of said capsule (100).

## Patentansprüche

1. Verfahren zur Entleerung von Kaffeepulverkapseln (100) vom gebrauchten Mahlgut, wobei die genannten Kapseln (100) des Typs sind, der Folgendes umfasst:
- einen Umschließungskörper (101) für Kaffeepulver, der mittels eines umlaufenden Rands (102) eine Zugangsöffnung definiert;
- eine Verschlusswand (103), die an dem umlaufenden Rand (102) des Umschließungskörpers (101) befestigt ist, um die Zugangsöffnung zu schließen;
wobei die genannte Vorrichtung (1) Folgendes umfasst:
- einen kastenartigen Körper (2), der im Inneren mindestens einen Auffangbehälter (4) für gebrauchtes Mahlgut definiert und mit mindestens einer oberen Wand (3) ausgestattet ist, die außen einer sichtbaren oberen Fläche (3") gegenüberliegt,
- mindestens ein Schneidelement (6), das mechanisch mit der oberen Wand (3) des genannten kastenartigen Körpers (2) verbunden ist und vorstehend von der oberen Fläche (3") der oberen Wand (3) des genannten kastenartigen Körpers (2) verläuft und dazu bestimmt ist, die Verschlusswand (103) der genannten Kapsel (100) zu durchtrennen, um die Verschlusswand (103) mindestens teilweise von dem Umschließungskörper (101) der genannten Kapsel (100) zu trennen;
wobei die obere Wand (3) des genannten kastenartigen Körpers (2) mit mindestens einer ersten Durchgangsöffnung (7) zum Entladen des gebrauchten Mahlguts in den genannten Auffangbehälter (4) ausgestattet ist;
wobei die genannte Vorrichtung (1) Folgendes umfasst
- mindestens eine Klinge (8), die mechanisch mit der oberen Wand (3) des genannten kastenartigen Körpers (2) verbunden ist und vorstehend von der oberen Fläche (3") der oberen Wand (3) des genannten kastenartigen Körpers (2) verläuft, die an der ersten Durchgangsöffnung (7) der genannten oberen Wand (3) platziert und geeignet ist, das gebrauchte Mahlgut aufzufangen und dieses von dem Umschließungskörper (101) der genannten Kapsel (100) zu trennen, um das genannte gebrauchte Mahlgut zumindest teilweise über die genannte erste Durchgangsöffnung (7) in den genannten Auffangbehälter (4) fallen zu lassen.

2. Vorrichtung (1) nach Anspruch 1, **dadurch gekennzeichnet, dass** sie um die genannte mindestens eine erste Durchgangsöffnung (7) herum platzierte erste Führungselemente (9) umfasst, die geeignet sind, den umlaufenden Rand (102) mit der genannten im Inneren des Umschließungskörpers (101) der genannten Kapsel (100) positionierten mindestens einen Klinge (8) drehbar zu führen, um das genannte gebrauchte Mahlgut aufzufangen.

3. Vorrichtung (1) nach Anspruch 2, **dadurch gekennzeichnet, dass** die genannten ersten Führungselemente (9) ein mechanisch an der oberen Fläche (3") der oberen Wand (3) des genannten kastenartigen Körpers (2) befestigtes erstes ringförmiges Seitenteil (10) umfassen, das mit mindestens einer um eine erste Achse (X) herum verlaufenden ersten inneren Seitenwand (12) mit im Wesentlichen zylindrischer Form ausgestattet ist, das darauf ausgelegt ist, den umlaufenden Rand (102) der genannten Kapsel (100) gleitend zu führen und um die genannte erste Achse (X) herum in Drehung zu versetzen.

4. Vorrichtung (1) nach Anspruch 3, **dadurch gekennzeichnet, dass** die erste innere Seitenwand (12) der genannten ersten Führungselemente (9) mit im Wesentlichen zylindrischer Form mit einem ersten Innendurchmesser (D1) ausgestattet ist, der mindestens der Breite der genannten ersten Durchgangsöffnung (7) entspricht.

5. Vorrichtung (1) nach Anspruch 4, **dadurch gekennzeichnet, dass** die genannte Klinge (8) Folgendes umfasst:
- eine erste Befestigungsklammer (13), die mindestens teilweise parallel zu der oberen Wand (3) des genannten kastenartigen Körpers (2) verläuft und mechanisch an dem genannten kastenartigen Körper (2) gehalten wird, die mindestens zwischen dem genannten ringförmigen Seitenteil (10) und der oberen Fläche (3") der oberen Wand (3) des genannten kastenartigen Körpers (2) eingefügt ist;
- einen Arbeitsabschnitt (14), der ausgehend von der genannten ersten Befestigungsklammer (13) im Wesentlichen orthogonal im Verhältnis zu der oberen Wand (3) des genannten kastenartigen Körpers (2) an der genannten ersten Durchgangsöffnung (7) verläuft und dazu bestimmt ist, das gebrauchte Mahlgut der genannten Kapsel (100) aufzufangen.

6. Vorrichtung (1) nach Anspruch 5, **dadurch gekennzeichnet, dass** der Arbeitsabschnitt (14) der genannten Klinge (8) im Wesentlichen einen ebenen Verlauf entlang einer im Verhältnis zu der genannten ersten Achse (X) geneigten Lageebene (Z) aufweist.

7. Vorrichtung (1) nach einem beliebigen der vorangegangenen Ansprüche 2 bis 6, **dadurch gekennzeichnet, dass** sie um das genannte mindestens eine Schneidelement (6) herum positionierte zweite Führungselemente (15) umfasst, die geeignet sind, den umlaufenden Rand (102) der genannten Kapsel (100) mit dem zum Überqueren der Verschlusswand (103) der Kapsel (100) positionierten mindestens einen Schneidelement (6) drehbar zu führen, um die genannte Verschlusswand (103) von dem umlaufenden Rand (102) der genannten Kapsel (100) zu trennen und sie von dem genannten umlaufenden Rand (102) zu entfernen.

8. Vorrichtung (1) nach Anspruch 7, **dadurch gekennzeichnet, dass** die genannten zweiten Führungselemente (15) ein mechanisch an der oberen Fläche (3") der oberen Wand (3) des kastenartigen Körpers (2) befestigtes zweites ringförmiges Seitenteil (16) umfassen, das mit mindestens einer um eine zweite Achse (Y) herum verlaufenden zweiten inneren Seitenwand (17) mit im Wesentlichen zylindrischer Form ausgestattet ist, das darauf ausgelegt ist, den umlaufenden Rand (102) der genannten Kapsel (100) zu führen und um die genannte zweite Achse (Y) herum in Drehung zu versetzen, wobei das genannte Schneidelement (6) zum Überqueren der genannten Verschlusswand (103) positioniert ist.

9. Verfahren zur Entleerung von Kaffeepulverkapseln vom gebrauchten Mahlgut, das mit Hilfe einer Vorrichtung (1) nach einem beliebigen der vorangegangenen Ansprüche erzielbar ist und mindestens Folgendes umfasst:
- einen Schritt des Anordnens der genannten Kapsel (100);
- einen Schritt des Einschneidens der Verschlusswand (103) der genannten Kapsel (100), wobei die Verschlusswand (103) näher an die obere Fläche (3") der oberen Wand (3) des kastenartigen Körpers (2) geschoben wird, wobei das genannte Schneidelement (6) zum Überqueren der Verschlusswand (103) der genannten Kapsel (100) angeordnet ist;
- einen Schritt des Durchtrennens der Verschlusswand (103) der genannten Kapsel (100), wobei die genannte Kapsel (100) bewegt wird, bei dem das genannte Schneidelement (6) zum Überqueren der genannten Verschlusswand (103) eingesetzt wird, um die genannte Verschlusswand (103) mindestens teilweise von dem umlaufenden Rand (102) der genannten Kapsel (100) zu trennen;
- einen Schritt des Einführens der genannten Klinge (8) in das Inneren des genannten Umschließungskörpers (101) der genannten Kapsel (100), bei dem die genannte Klinge (8) dazu angeordnet ist, das gebrauchte Mahlgut aufzufangen;
- einen Schritt des Trennens des gebrauchten Mahlguts von der genannten Kapsel (100), wobei die genannte Kapsel (100) bewegt wird, bei dem die genannte Klinge (8) im Inneren des genannten Umschließungskörpers (101) gehalten wird, um das genannte verbrauchte Mahlgut aufzufangen und dieses so zumindest teilweise von dem Umschließungskörper (101) der genannten Kapsel (100) zu trennen, um das genannte Mahlgut über die genannte erste Durchgangsöffnung (7) in den genannten Auffangbehälter (4) fallen zu lassen.

10. Verfahren nach Anspruch 9, das mittels einer Vorrichtung nach einem der Ansprüche 2 bis 6 erzielt werden kann, **dadurch gekennzeichnet, dass** der genannte Trennungsschritt für das Drehen der genannten Kapsel (100) auf eine geführte Weise mit dem umlaufenden Rand (102) auf dem genannten ersten Führungselement (9) um die genannte erste Achse (X) herum sorgt, wobei die genannte Klinge (8) mit dem genannten Mahlgut interferiert und dieses von dem Umschließungskörper (101) der genannten Kapsel (100) trennt.

## Revendications

1. Dispositif pour vider des capsules de poudre de café (100) du produit moulé utilisé, lesdites capsules (100) étant du type comprenant:
- un corps de réceptacle (101) pour la poudre de café définissant, par l'intermédiaire d'un bord de périmètre (102), une ouverture d'accès;
- une paroi de fermeture (103) fixée au bord de périmètre (102) du corps de réceptacle (101) pour fermer l'ouverture d'accès;
ledit dispositif (1) comprenant:
- un corps en forme de boîte (2) définissant intérieurement au moins une chambre de collecte (4) pour le produit moulé utilisé et pourvue d'au moins une paroi supérieure (3) qui est orientée extérieurement vers une face supérieure visible (3"),
- au moins un élément de coupe (6) relié mécaniquement à la paroi supérieure (3) dudit corps en forme de boîte (2) et étendu de manière saillante de la face supérieure (3") de la paroi supérieure (3) dudit corps en forme de boîte (2) et destiné à couper la paroi de fermeture (103) de ladite capsule (100) afin de séparer au moins partiellement la paroi de fermeture (103) du corps de réceptacle (101) de ladite capsule (100);
la paroi supérieure (3) dudit corps en forme de boîte (2) étant pourvue d'au moins un orifice de passage (7) pour évacuer le produit moulé utilisé à l'intérieur de ladite chambre de collecte (4);
dans lequel ledit dispositif (1) comprend
- au moins une lame (8) reliée mécaniquement à la paroi supérieure (3) dudit corps en forme de boîte (2) et étendue de manière saillante de la face supérieure (3") de la paroi supérieure (3) dudit corps en forme de boîte (2), placée au niveau du premier orifice de passage (7) de ladite paroi supérieure (3) et susceptible d'intercepter le produit moulé utilisé et de le séparer du corps de réceptacle (101) de ladite capsule (100) afin d'amener ledit produit moulé utilisé à être au moins partiellement déversé dans ladite chambre de collecte (4) à travers ledit premier orifice de passage (7).

2. Dispositif (1) selon la revendication 1, **caractérisé en ce qu'**il comprend des premiers moyens de guidage (9) placés autour dudit au moins un premier orifice de passage (7) et susceptibles de guider de façon rotative le bord de périmètre (102) avec ladite au moins une lame (8) placée à l'intérieur du corps de réceptacle (101) de ladite capsule (100) afin d'intercepter ledit produit moulé utilisé.

3. Dispositif (1) selon la revendication 2, **caractérisé en ce que** lesdits premiers moyens de guidage (9) comprennent un premier épaulement annulaire (10) fixé mécaniquement à la face supérieure (3") de la paroi supérieure (3) dudit corps en forme de boîte (2) et pourvu d'au moins une première paroi latérale interne (12) avec une forme sensiblement cylindrique étendue autour d'un premier axe (X), configuré pour guider de façon coulissante le bord de périmètre (102) de ladite capsule (100) pour qu'il pivote autour dudit premier axe (X).

4. Dispositif (1) selon la revendication 3, **caractérisé en ce que** la première paroi latérale interne (12) desdits premiers moyens de guidage (9) avec une forme sensiblement cylindrique est pourvue d'un premier diamètre interne (D1) supérieur ou égale à la largeur dudit premier orifice de passage (7).

5. Dispositif (1) selon la revendication 4, **caractérisé en ce que** ladite lame (8) comprend:
- une première patte de fixation (13) étendue de façon au moins partiellement parallèle à la paroi supérieure (3) dudit corps en forme de boîte (2) et liée mécaniquement audit corps en forme de boîte (2), interposée au moins entre ledit premier épaulement annulaire (10) et la face externe (3") de la paroi supérieure (3) dudit corps en forme de boîte (2);
- une pièce de fabrication (14), étendue à partir de ladite première patte de fixation (13), sensiblement orthogonale par rapport à la paroi supérieure (3) dudit corps en forme de boîte (2) au niveau dudit premier orifice de passage (7) et destinée à intercepter le produit moulé utilisé de ladite capsule (100).

6. Dispositif (1) selon la revendication 5, **caractérisé en ce que** la pièce de fabrication (14) de ladite lame (8) a une extension sensiblement planaire le long d'un plan de pose (Z) qui est incliné par rapport audit premier axe (X).

7. Dispositif (1) selon l'une quelconque des revendications précédentes 2 à 6, **caractérisé en ce qu'**il comprend des seconds moyens de guidage (15) placés autour dudit au moins un élément de coupe (6) et susceptibles de guider de façon rotative le bord de périmètre (102) de ladite capsule (100) avec ledit au moins un élément de coupe (6) placé pour traverser la paroi de fermeture (103) de ladite capsule (100) afin de séparer ladite paroi de fermeture (103) du bord de périmètre (102) de ladite capsule (100) et de l'enlever dudit bord de périmètre (102).

8. Dispositif (1) selon la revendication 7, **caractérisé en ce que** lesdits seconds moyens de guidage (15) comprennent un second épaulement annulaire (16) fixé mécaniquement à la face supérieure (3") de la paroi supérieure (3) dudit corps en forme de boîte (2) et pourvu d'au moins une seconde paroi latérale interne (17) ayant une forme sensiblement cylindrique étendue autour d'un second axe (Y) et configuré pour guider de façon coulissante le bord de périmètre (102) de ladite capsule (100) pour pivoter autour dudit second axe (Y) avec ledit élément de coupe (6) placé pour traverser ladite paroi de fermeture (103).

9. Procédé pour vider les capsules de poudre de café du produit moulé utilisé, réalisable au moyen d'un dispositif (1) selon l'une quelconque des revendications précédentes et comprend au moins:
- une étape consistant à disposer ladite capsule (100);
- une étape consistant à inciser la paroi de fermeture (103) de ladite capsule (100), dans laquelle la paroi de fermeture (103) est poussée pour s'approcher de la face externe (3") de la paroi supérieure (3) dudit corps en forme de boîte (2) avec ledit élément de coupe (6) placé pour traverser la paroi de fermeture (103) de ladite capsule (100);
- une étape consistant à couper la paroi de fermeture (103) de ladite capsule (100), dans laquelle ladite capsule (100) est déplacée, en retenant ledit élément de coupe (6) pour traverser ladite paroi de fermeture (103) afin de séparer au moins partiellement ladite paroi de fermeture (103) du bord de périmètre (102) de ladite capsule (100);
- une étape consistant à insérer ladite lame (8) à l'intérieur dudit corps de réceptacle (101) de ladite capsule (100), avec ladite lame (8) placée pour intercepter ledit produit moulé utilisé;
- une étape consistant à séparer le produit moulé utilisé de ladite capsule (100), dans laquelle ladite capsule (100) est déplacée, en retenant ladite lame (8) à l'intérieur dudit corps de réceptacle (101) pour intercepter ledit produit moulé utilisé, en le séparant au moins partiellement du corps de réceptacle (101) de ladite capsule (100) afin d'amener ledit produit moulé utilisé à être déverser dans ladite chambre de collecte (4) à travers ledit premier orifice de passage (7).

10. Procédé selon la revendication 9, réalisable au moyen d'un dispositif selon l'une des revendications 2 à 6, **caractérisé en ce que** ladite étape de séparation prévoit la rotation de ladite capsule (100) dans une modalité guidée avec le bord de périmètre (102) sur lesdits premiers moyens de guidage (9) autour dudit premier axe (X), ladite lame (8) interférant avec ledit produit moulé utilisé, en le séparant du corps de réceptacle (101) de ladite capsule (100).
